(19) Europäisches Patentamt

European Patent Office

Office européen des brevets

(11) EP 0 785 444 A2

(12) EUROPEAN PATENT APPLICATION

(43) Date of publication:
23.07.1997 Bulletin 1997/30

(51) Int Cl.6: **G01T 1/00**, G01T 1/202

(21) Application number: 97200120.0

(22) Date of filing: 15.01.1997

(84) Designated Contracting States:
DE FR GB

(30) Priority: 18.01.1996 US 10205

(71) Applicant: **Saint-Gobain/Norton Industrial Ceramics Corporation**
Worcester, MA 01615-0138 (US)

(72) Inventor: **Novak, William P.**
Middlefield, Ohio 44062 (US)

(74) Representative: **Richebourg, Michel François**
Cabinet Michel Richebourg,
"Le Clos du Golf",
69, rue Saint-Simon
42000 Saint Etienne (FR)

(54) **Radiation detector with improved response**

(57)    An x-ray detector for computer-assisted tomography (CAT) having an array of cadmium tungstate scintillation crystal rods (16) for generating light output which is coupled to photodiode (24) has the end edges of the rods chamfered (30) to reduce variations in the optical response output of the rods to the photodiode with variations in the axial location of the light generation in the rod.

FIG. 3

## Description

Field of the invention:

The invention relates generally to radiation detectors and relates more particularly to scintillation crystal x-ray detectors of the type used in computer-assisted tomography for medical or other purposes.

Background:

Computer-assisted tomography is used primarily for medical diagnosis to construct an image of internal tissue. The object to be examined is placed between an x-ray beam source and a detector device. The x-ray beam passes through the tissue to the detector, which gives an electrical output signal indicative of the attenuation of the beam. Differences in tissue structure result in known different degrees of attenuation for the x-ray beam. Multiple exposures through progressive "slices" of the tissue in a series of planes and from a scanning through different angles in each plane are made, and the resulting output information from the detector device is sent to a computer for processing by inverse theory to construct an image which can appear on a cathode ray screen or be otherwise processed and depicted.

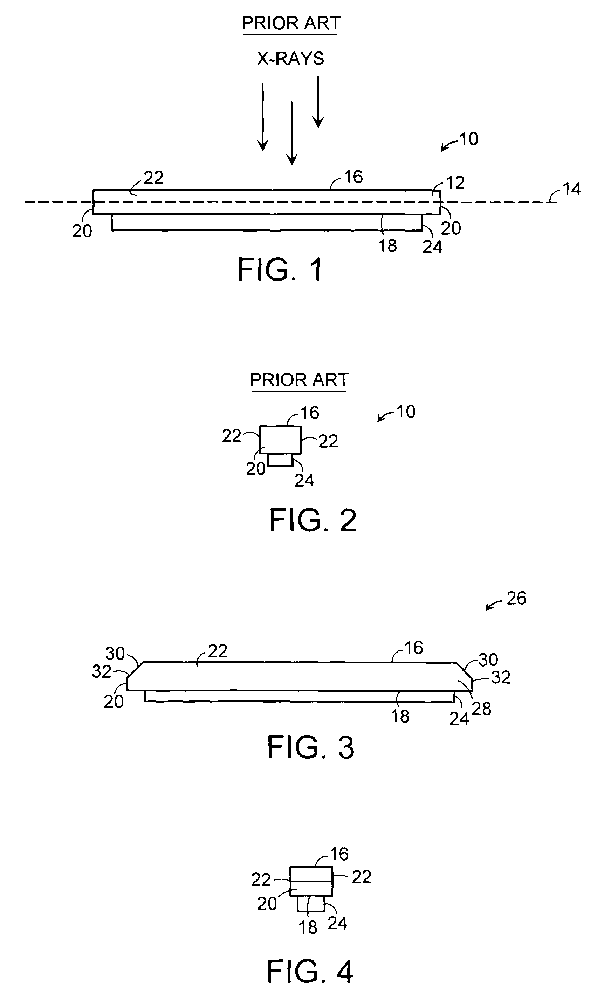

The detector device is made up of one or more detector channels. A channel is a detector and its associated electronics. A detector is made up of a scintillation device for converting the x-radiation to light and an optical conversion device for converting the light to an electrical signal. While there are different types of detectors for computer-assisted tomography. At present the type of most interest is a solid state device in which a scintillation crystal is optically coupled to a solid state photodiode. The scintillation crystal, which may be made of cadmium tungstate ($CdWO_4$) converts the x-radiation to visible light, which then travels to the photodetector attached directly to the crystal and is converted to a representative electrical output signal for input to the computer. While in theory only a single detector is necessary, in practice there are typically 30 or more such detectors arranged in an arc array to permit a reduction in the time the tissue is exposed to the x-radiation. The crystals are in the form of small rods with a rectangular cross-section, an example of which is shown in FIGS 1 and 2. The detector 10 of FIGS. 1 and 2 features a scintillation crystal 12 having a longitudinal axis 14, an input face 16, an output face 18 opposite the input face 16, end faces 20, and side faces 22. For multiple channel arrays, the detectors are sandwiched together with their side faces adjacent each other and separated by a collimating wall of x-ray absorbing material which prevents channel cross-talk. The output face is bonded by means of a transparent agent directly to a silicon photodiode 24. Examples of such detectors may be found in United States Patents 4,694,177 issued Sept. 15, 1987 to Akai and 4,725,734 issued Feb. 16, 1988 to Nishiki. A discussion of the general design considerations for such detectors may be found in Glasow et al's "Aspects of Semiconductor Current Mode Detectors for X-Ray Computed Tomography" in IEEE Transaction on Nuclear Science, Vol. NS-28, No. 1, February 1981, pp. 563-571.

A typical presently-used detector crystal is a rectangaloid bar of scintillator material, such as CdWO4, which is 20 mm (millimeters) to 30 mm long, from 0.5 to 2mm wide and 2 mm to 3 mm thick with end faces which are perpendicular to the longitudinal axis of the crystal. The thickness of the bars is determined by the amount of the particular scintillator required to absorb the x-ray beam; the width of the bar is determined by the resolution required. The length of the channels is determined by the size of the picture, or thickness of the "slice", being taken and the response characteristic or amount of signal deviation allowed. For example, if a 20mm long useful crystal length is required for a single plane exposure, a 30mm long crystal may be required to meet the performance requirements. The bar is made slightly larger than the photodiode to which it is attached, so that x-rays cannot reach the diode directly and cause unwanted noise in the system. The end faces 20 extend typically about 0.5 mm beyond the photodiode 24 and the side faces 22 extend typically about 5% of the width of the crystal 12 over the photodiode 24. For this crystal 12, the useful length for detection can be considered to be about the middle 20 mm of its length.

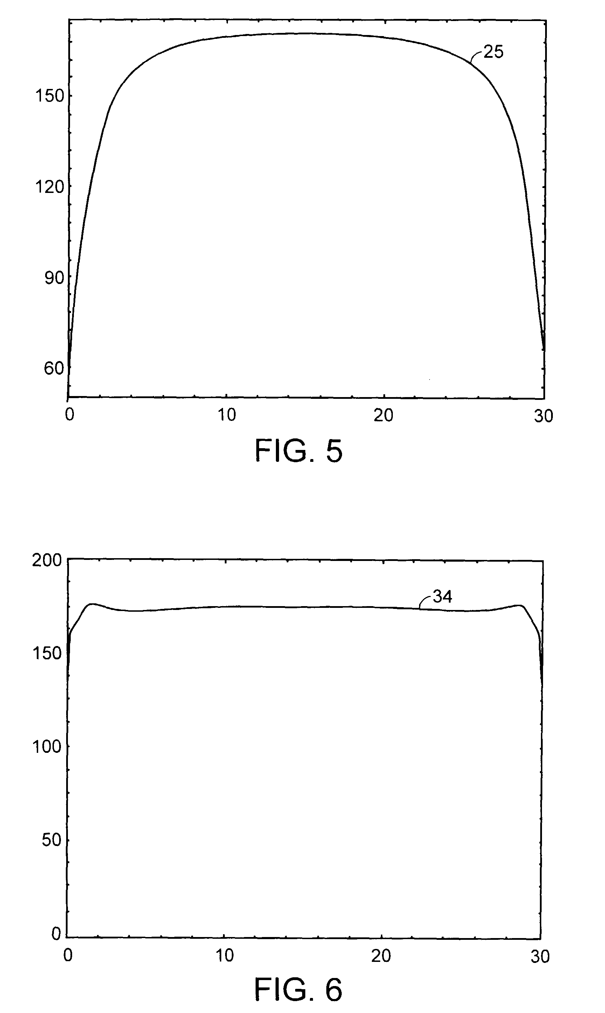

The best response of the detector to incident radiation is when the midpoint of the radiation beam is incident at its axial central. However, in practice there are deviations of the midpoint of the beam from the midpoint of the detector, perhaps as a result of vibrations, thermal stress-induced misalignments in the equipment, or other factors which may effect the beam direction. It is a drawback of present scintillation crystals used in computer-assisted tomography detectors that when the midpoint of the beam is not incident on the crystal precisely at its longitudinal midpoint, the corresponding light output from the crystal to the photodiode may be reduced, thus yielding a signal which includes a false attenuation and can result in the inclusion of erroneous data in the image to be generated. For this reason, it is the present practice to use only a central segment of the length of the crystal for receiving the beam, thus requiring a longer crystal. The increased length of the crystal not only increases the cost of the detector, but also increases the size of other features of the computer-assisted tomography system in which the detector is to be housed. The curve 25 of FIG. 5 is a graphical representation of the signal strength variation along the longitudinal axis of the crystal 12 of FIGS. 1 and 2 as an x-ray beam of constant intensity is moved along the longitudinal axis from one end of the crystal to the other. The abscissa indicates the longitudinal position in millimeters. The ordinate indicates an arbitrary magnitude of output signal from the photodiode 24, with the assumption that there are no serious nonlinearities present. It is seen that only about the central two-thirds of the length has a relatively flat response.

## Summary of the invention:

The invention addresses the non-uniform response problem of the detector by redirecting the internally-reflected portion of the light created in the scintillation crystal so that the output response is altered. This is accomplished by beveling the ends of the crystal to form reflective surfaces which are non-perpendicular to the longitudinal axis of the crystal and which redirect the reflected light in the detector to affect the response curve. In this manner, the response can be made more uniform for longitudinally varying x-ray beam positions or can be otherwise altered as desired.

## Brief Description of the drawings:

FIG. 1 is a front view of a prior art detector.
FIG. 2 is a side view of the detector of FIG. 1
FIG. 3 is a front view of a novel detector having modified ends in accordance with a preferred embodiment of the present invention.
FIG. 4 is a side view of the detector of FIG. 3
FIG. 5 is a graph showing the calculated response curve of the detector of FIGS. 1 and 2.
FIG. 6 is a graph showing the calculated response curve of the detector of FIGS. 3 and 4.
FIG. 7 is a graph showing the calculated light output of the detector of FIGS. 3 and 4 which is due to only internally reflected light from the modified ends.
FIG. 8 is a graph showing the response of the graph of FIG. 7 as adjusted to account for internal reflection losses.
FIG. 9 is a graph showing data plots comparing the responses of the detector of FIGS. 1 and 2 and the detector of FIGS. 3 and 4.
FIG. 10 is a front view of the prior art detector of FIGS 1 and 2 showing vectors for calculating the theoretical light response.
FIG. 11 is a front view of the detector of FIGS. 3 and 4 showing vectors for calculating the theoretical light response attributable to reflections from the modified ends.

## Description:

In accordance with the present invention, a novel detector 26 shown in FIGS. 3 and 4 comprises a scintillation crystal 28 bonded with a transparent bonding agent to a photodiode substrate 24. The crystal 26 is a right rectangaloid which has an input face 16, an output face 18 opposite and parallel to the input face 16, end faces 20, and mutually parallel side faces 22. The ends additionally have reflecting bevel surfaces 30. The crystal 28 is of cadmium tungstate. It has a thickness "B" of 2.5 cm (centimeters), a length "C" of 30 cm, and a useful length "D" of 20 cm. The ends extend beyond the ends of the photodiode substrate 24 by a distance "A" of 0.5 cm. The photodiode substrate 24 has a length "E" of 29 cm. The width of the crystal 28 is 1.5 cm. The width of the photodiode substrate 24 is 10% less than that of the cyrstal 28, so that there is a 5% overhang of the crystal 28 on each side of the photodiode substrate 24

The bevel surfaces 30 form reflecting facets oriented at 45 degrees to the output face 18 and extending from a shoulder 32 which is 1 mm above and parallel to the output face 18. The bevel surfaces 30 result in internal reflection modes in the crystal 26 which flatten out the light response to the photodiode 24, so that more of the length of the crystal may be actively used to receive the beam. This permits the use of shorter crystals, thereby reducing both the cost and size of the detector. The light response for the crystal 26 is shown by the curve 34 in the graph of FIG. 6.

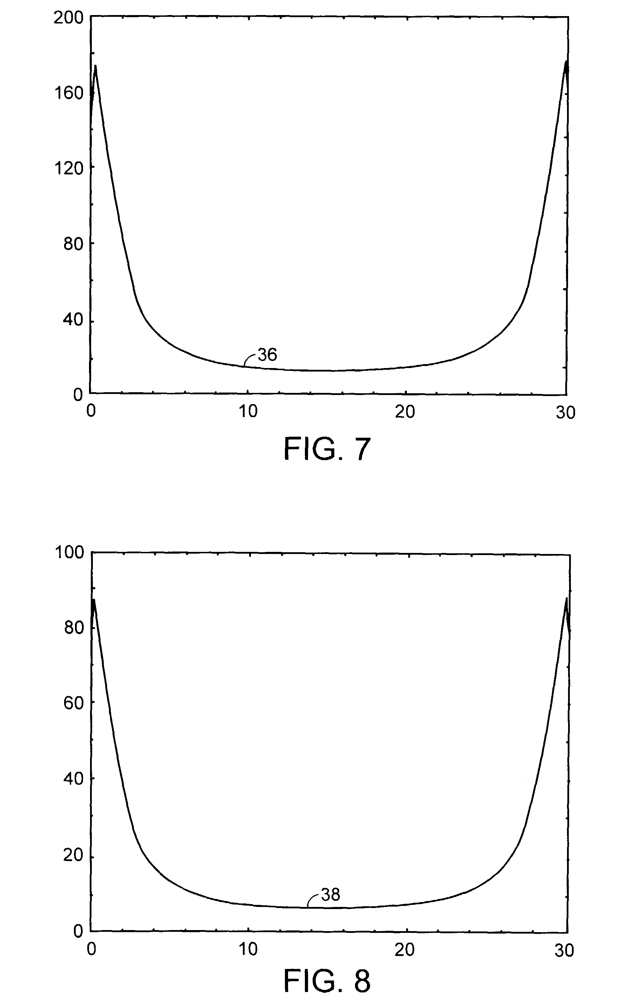

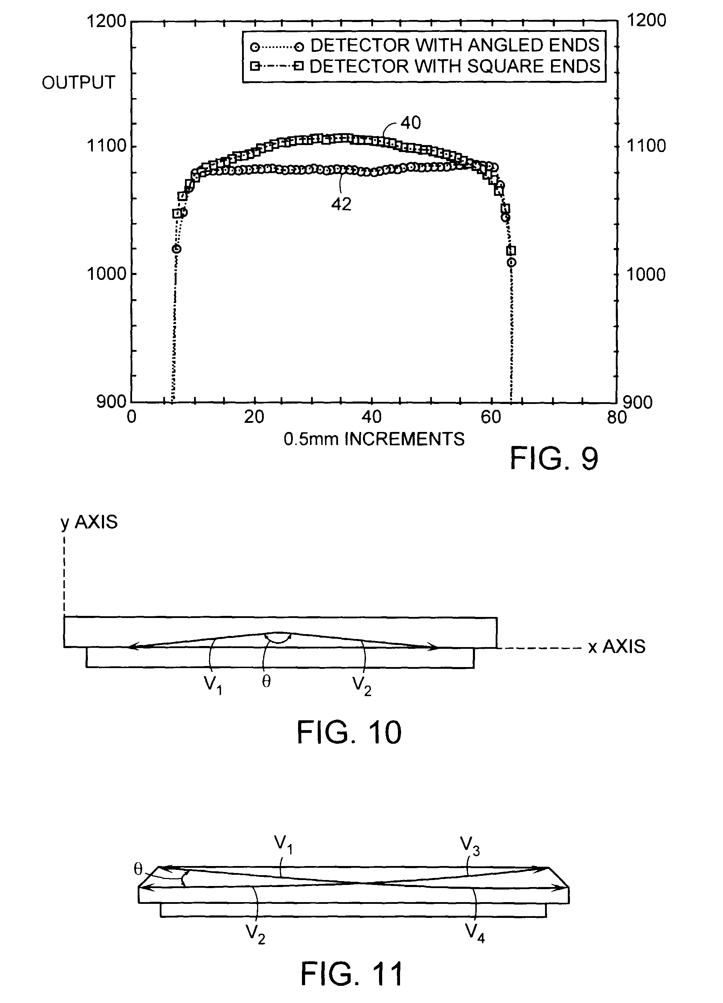

It can be shown, as is discussed below, that when a light scintillation event occurs in the center of the crystal of the novel detector 26 of FIGS. 3 and 4, the response curve of the light reflected internally from the modified ends taken alone is represented by the curve 36 which appears in the FIG. 7, in which again the abscissa is the location in millimeters along the rod, while the ordinate is the photodiode output. After taking into account an internal attenuation of about 50%, the resulting response curve 38 of FIG. 8, normalized with the ordinate values of the response curve 25 of FIG. 5, is shown as the curve 34 in FIG. 6. The curve 40 of FIG. 9 shows a plot of the actual output values for the detector 10 of FIGS. 1 and 2 without the bevel surfaces 32 of the invention as compared to the curve 42 showing the actual output values for the detector 26 of FIGS. 3 and 4 with the bevel surfaces 32 according to the invention.

While the detector crystal 28 of the above embodiment is of cadmium tungstate, it may also be of other suitable scintillating material, such as sodium iodide, calcium fluoride, or bismuth germinate and derive similar benefits from the invention. Also, while the optical conversion device of the described embodiment is a solid state photodiode, it should be understood that any suitable device for performing the conversion of optical signals to electrical ones could be used.

The size of the bevel surface effects the output response. Therefore, it should be chosen to effect the response as is desired for a particular application, based on the optical principles involved in the light response analysis described in detail below. The bevel surface could conceivably include the entire end faces, if necessary. However, for a bevel surface at 45 degrees, such as for the crystal 28, this would leave a relatively fragile edge at the output face of the crystal. Therefore, the bevel surface is preferably started a small distance up from the output face. The bevel surface may be any angular orientation which is non-perpendicular to the longitudinal axis of the crystal in order to effect the desired modification of the response of the detector. There may be a plurality of such bevel surfaces provided at one or both ends which are specifically designed to shape the response a certain way for a particular application, for example where a response other than one optimized for flatness is desired. The present invention permits deliberate modification of the response by appropriate orientation and sizing of faceted surfaces at one or both ends of the crystal. The appropriate orientation and sizing of such faceted surfaces can be readily established by an analysis of the internal reflections by known analytical techniques such as are described below.

Light Response Analysis

The light response for the novel detector 26 of FIGS. 3 and 4 can be analyzed as follows:

It is assumed for the purposes of the analysis that the photons are emitted and radiate outward in all directions from a point directly in the center of the bar over the spot where the x-rays enter. The problem is to find the output as the point of stimulation moves longitudinally along the bar. If the photons are emitted uniformly in all directions, then the magnitude of the output is proportional to the size of the acute angle between the vectors V1 and V2 as shown in Figure 10.

The definition of the dot product for the vectors $V_i$ and V2 gives the angle "$\theta$" between the vectors. A coordinate axis system will be put in place and the vectors will be calculated as shown below:

$$V_1 = (A, O) - (X, \tfrac{1}{2}B)$$

$$V_1 = (A-X)\, i - \tfrac{1}{2}Bj$$

$$V_2 = (C-A, O) - (X, \tfrac{1}{2}B)$$

$$V_2 = (C-A-X)i - \tfrac{1}{2}Bj$$

Once this is done, the definition of the dot product is used.

Definition of the dot product:

A vector A dotted with another vector B is equal to the cosine of the angle $\theta$ between the vectors multiplied by the product of their magnitudes, or

$$A \cdot B = COS\ \theta \text{ x } (\,A\ B\,)$$

When this operation is performed for a detector with dimensions A, B, C as for the detector 10 above, the following general equation results:

$$\theta = cos^{-1}\{(X^2 - CX + D)\,(X^4 + EX^3 + FX^2 + GH + H)^{-1/2}\}$$

where

$$D = AC - A^2 - \tfrac{1}{4}B^2$$

$$E = -2C$$

$$F = \tfrac{1}{2}B^2 - 2A^2 + 2AC + C^2$$

$$G = 2CA^2 - \tfrac{1}{2}CB^2 - 2C^2A$$

$$H = \tfrac{1}{16}B^4 + \tfrac{1}{4}B^2C^2 + \tfrac{1}{2}B^2A^2 - \tfrac{1}{2}B^2AC + A^2C^2 + A^4 - 2A^3C$$

Substituting the dimensions for the detector 10 for A, B, and C, the following equation results:

$$\theta = COS^{-1}\{(X^2 - 30X + 16.3125)\,(X^4 - 60X^3 + 932.625X^2 - 978.75X + 1580.160156)^{-1/2}\}$$

The graph of this equation is the graph of FIG. 5.

To reduce the deviation between the end points of this graph and the center, 45° angles are cut on the edges of the detectors as shown for the detector 26 of FIGS. 3 and 4. It will now be shown mathematically that these angled corners will help reduce the difference between the end points and the center.

Again, the same assumption as before will be made, namely that the light is emitted uniformly in all directions from a spot in the center of the bar. It can be shown that the bevel surfaces actually help decrease the deviation in the detector. It will be assumed that the light that is reflected into the photodiode 24 is directly proportional to the light that hits the reflecting surfaces. Therefore, all that must be done is to calculate the magnitude of light that impacts on the reflective surfaces as the stimulation point changes. This will be done in exactly the same way using the definition of the dot product and setting up a coordinate axis system. This time however there will be two sets of vectors instead of one. The angle between each set will be added together to give the total magnitude of light that impacts on the reflecting bevel surfaces from any one emission spot in the bar. The setup is shown in Figure 11.

$$V_3 = (28.5,\ 2.5) - (X,\ 1.25) \qquad V_4 = (30, 1) - (X, 1.25)$$

$$V_3 (28.5 - X)i + 1.25j \qquad V_4 = (30 - X)i - .25j$$

$$V_1 = (0, 1) - (X, 1.25) \qquad V_2 = (1.5,\ 2.5) - (X, 1.25)$$

$$V_1 = -Xi - .25j \qquad V_2 = (1.5 - X)i + 1.25j$$

Using the definition of the dot product, the following equations are obtained:

$$\theta = COS^{-1}\{(X^2 - 1.5\,X - .3125)\,(X^4 - 3X^3 + 3.875X^2 - .1875X + .23828125)^{-1/2}\} +$$

$$COS^{-1}\{(X^2 - 58.5X + 854.6875)\,(X^4 - 117X^3 + 5133.875X^2 - 100132.3125X + 732482.11328125)^{-1/2}\}$$

Combining the two, the output is shown on graph of FIG. 7. It can be seen that this graph varies inversely to the original. The light intensity is greater at the edges and has a minimum value in the middle exactly the opposite to that of the graph of FIG. 5, thus proving that the angled edges will help reduce the deviation of the output. The amount of help depends on what percentage of light impacting on the angled surfaces is actually reflected to the detector. The higher this percentage is, the less deviation there will be in the total output to the detector. If it is assumed that 50% of the light impinging on the beveled surfaces reaches the photodiode 24 of FIGURES 3 and 4, then a response as shown by the curve 38 of FIG. 8 is generated. When this response is combined with the output of the normal detector 10 of FIGS. 1 and 2 as shown by curve 25 of FIG. 5, then the resultant response becomes as is shown by the curve 34 of FIG. 6 for the novel detector 26 of FIGS. 3 and 4.

**Claims**

1. A radiation detector device, comprising:

an elongated scintillation crystal having a longitudinal axis, a radiation input face parallel to the axis, a light output face parallel to and opposite the intput face, side faces parallel to the axis, and end surfaces at the opposite ends of the crystal, at least a first portion of each of the end surfaces being non-perpendicular to the longitudinal axis, and
a conversion device coupled to the output face of the crystal for converting the light output to an electrical signal.

2. The device according to claim 1 wherein the end surfaces comprise first portions which are flat faces.

3. The device according to claim 2 wherein respective first portions of the end surfaces are oriented with respect to the axis at the same angle.

4. The device according to claim 3 wherein the first portions of the end surfaces have similar orientations with respect to the axis and the center of the crystal.

5. The device according to claim 4 wherein the body of the crystal has a rectangular cross-section.

6. The device according to claim 5 wherein the first portions of the end surfaces are rectangular.

7. The device according to claim 6 wherein second portions of the end surfaces are also rectangular and are oriented perpendicular to the axis.

8. The device according to claim 7 wherein the first portions of the end surfaces have an edge in common with an edge of the input face.

9. The device according to claim 8 wherein the second portions of the end surfaces are mutually parallel and are perpendicular to the axis.

10. The device according to claim 9 wherein the crystal is a cadmium compound.

11. The device according to claim 10 wherein the cadmium compound is cadmium tungstate.

12. The device accroding to claim 11 wherein the conversion device is a solid state device.

13. The device according to claim 12 wherein the solid state conversion device is smaller in width and length than is the crystal and is mounted to the output face of the crystal.

14. The device according to claim 13 wherein the solid state conversion device is a photodiode.

15. The device according to claim 14 wherein the photodiode is a silicon photodiode.

PRIOR ART

X-RAYS

FIG. 1

PRIOR ART

FIG. 2

FIG. 3

FIG. 4

FIG. 5

FIG. 6

FIG. 7

FIG. 8

FIG. 9

FIG. 10

FIG. 11